Europäisches Patentamt

European Patent Office

Office européen des brevets

(19)

(11) Veröffentlichungsnummer: 0 402 823
A2

## (12) EUROPÄISCHE PATENTANMELDUNG

(21) Anmeldenummer: 90110982.7

(51) Int. Cl.⁵: G02C 3/00

(22) Anmeldetag: 11.06.90

(30) Priorität: 14.06.89 DE 8907254 U

(43) Veröffentlichungstag der Anmeldung:
19.12.90 Patentblatt 90/51

(84) Benannte Vertragsstaaten:
AT BE CH DE DK ES FR GB GR IT LI LU NL SE

(71) Anmelder: RENFERT GmbH & Co.
Industriegebiet
D-7709 Hilzingen(DE)

(72) Erfinder: Rieger, Klaus-Ulfert
Kornblumenweg 39
D-7709 Hilzingen 1(DE)

(74) Vertreter: Hiebsch, Gerhard F., Dipl.-Ing. et al
Hiebsch & Peege Patentanwälte Postfach
464 Erzbergerstrasse 5a
D-7700 Singen 1(DE)

(54) Tragvorrichtung zum Befestigen von Linsen.

(57) Eine Tragvorrichtung (20) zum Befestigen von Linsen (40) am Kopf eines Benutzers mit einem Paar von Brillenbügeln (18) an einem diese verbindenden Stirnstab (26), weist einen von diesem abragenden Stützstab (42) mit auf die Nase (10) eines Benutzers aufsetzbarem Stützfuß (44) od.dgl. sowie einen angelenkten Tragteil (34-36) für die als Vergrößerungsokulare geschliffenen Linsen auf, die in einer Sichtstellung (A) in einem Abstand (d) zum Stützstab verlaufen. Zudem besteht das Tragteil aus einem Werkstoffstreifen (34) der einends durch ein Klappgelenk (32) an den Stirnstab (26) angeschlossen und in Abstand (t) dazu rechtwinklig gebogen ist, wobei am freien Ende (35) des Werkstoffstreifens Aufnahmen (38) für die Linsen (40) vorgesehen sind.

Fig.1

EP 0 402 823 A2

Die Erfindung betrifft eine Tragvorrichtung zum Befestigen von Linsen am Kopf eines Benutzers.

Es ist bekannt, Vergrößerungslinsen in Brillengestellen unter zu bringen, um damit beispielsweise Philatelisten eine verbesserte Betrachtung von Briefmarken zu ermöglichen. Auch ist es üblich, Sehhilfen in Form von zentrisch durchbrochenen Spiegeln für Ärzte an einem Stirnband zu tragen.

In Kenntnis dieses Standes der Technik hat sich der Erfinder das Ziel gesetzt, eine Sehhilfe insbesondere für Zahnärzte, Laboranten od.dgl. zu schaffen, die zum einen ein freies Arbeiten ermöglicht, sowie zum anderen auch von Brillenträgern benutzt werden kann; denn es hat sich besonders nachteilig bei allen bisher bekannten Sehhilfen herausgestellt, daß man entweder Brillen gegeneinander austauschen mußte oder aber daß Brillenträger mit auf die Brille aufzusteckenden Zusatzlinsen arbeiten mußten.

Zur Lösung dieser Aufgabe führt eine Tragvorrichtung zum Befestigen von Linsen am Kopf des Benutzers mit einem Paar von Brillenbügeln an einem sie verbindenden Stirnstab, einem von diesem abragenden Stützstab mit auf die Nase eines Benutzers aufsetzbarem Stützfuß od.dgl. sowie mit einem ange lenkten Tragteil für die als Vergrößerungsokulare geschliffenen Linsen, die in einer Sichtstellung in Abstand zum Stützstab verlaufen. Darüberhinaus hat es sich als günstig erwiesen, das Tragteil aus einem Werkstoffstreifen herzustellen, der einends durch ein Klappgelenk am Stirnstab angeschlossen und in einem Abstand dazu rechtwinklig gebogen ist, wobei am freien Ende des Werkstoffstreifens Aufnahmen für die -- gegebenenfalls austauschbar angeordneten --Linsen vorgesehen sind.

Eine derartige Tragvorrichtung kann ähnlich einer Brill --aber zusätzlich zu dieser -- am Kopf des Benutzers festgelegt werden, wobei der Stützfuß auf der Nase außerhalb der Brille aufliegt. Die Sehlinie des Benutzers geht dann durch die individuellen Brillengläser und durch die in Abstand vorgesetzten Linsen. Besonderer Anpassungen bedarf es nicht; die Vergrößerungslinsen sind -- da Brillenträger nicht hindernd -- für alle Sehstärken der Benutzer gleich.

Insbesondere bei Zahnärzten verhindert eine solche erfindungsgemäße Vorrichtung, daß dieser durch vorgesetzte Okulare beim Patienten einen erschreckend außerterrestrischen Eindruck erweckt. Ein solcher wäre vor allem bei Kindern für die Behandlung nachteilig. Darüberhinaus bleibt dank des Abstandes zwischen Auge und Vergrößerungsokular das seitliche Sichtfeld i.w. erhalten und ermöglicht ihm so, den Allgemeinzustand des Patienten bei der Behandlung im Auge zu behalten, was gerade in der Zahnarztpraxis bei unvorhergesehenem Unwohlsein des Patienten von großer Bedeutung ist.

Als besonders günstig hat es sich erwiesen, dank des Klappgelenkes die Linsen aus der beschriebenen Sehstellung herausklappen zu können, was entweder stufenlos oder aber in mehreren Stufen erfolgen kann, in jedem Fall soweit, daß die Linsen außerhalb des Gesichtsfeldes des Benutzers liegen können, bevorzugt etwa parallel zur Bügelebene.

Bezüglich weiterer erfindungsgemäßer Merkmale wird auf die Unteransprüche Bezug genommen. Dabei soll als besonders bedeutsam hervorgehoben werden, daß die Bügel selbst an die Kopfform des Benutzers anpaßbar ausgebildet sind, beispielsweise durch eine Art Knautschzone im Bereich einer Kröpfung des Bügels. Letztere hat zudem die Folge, daß der Gestellbügel in Abstand zur Brille des Benutzers verläuft und deshalb letztere im unbehinderten Zugriff liegt.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in

Fig. 1: die Seitenansicht einer erfindungsgemäßen Vorrichtung;

Fig. 2: einen Teil der Draufsicht auf Fig. 1;

Fig. 3: einen Teil der Vorrichtung in Biegrichtung des Pfeiles III in Fig. 1.

An einer bei 10 angedeuteten menschlichen Nase ist eine Brille 12 mit Brillenglas 13 und der Nase 10 aufliegenden Jochplatten 14 aus Kunststoff zu erkennen - ansonsten ist von dieser Brille 12 aus Gründen der Übersichtlichkeit nur noch ein Teil des Brillenbügels 16 dargestellt, der einem in der Zeichnung vernachlässigten Ohr eines Benutzers aufliegt.

Oberhalb des Brillenbügels 16 verläuft am Kopf dieses Benutzers ein in Tragstellung i.w. horizontal gerichteter Bügel 18 eines Haltegestells 20. Dieser Bügel 18 trägt an seinem freien Ende ein übliches, in sich abgewinkeltes Anlageteil 19 aus Kunststoff, welches sich in Tragstellung zwischen Ohrmuschel und Kopf des Benutzers an letzteren anschmiegt.

Frontwärts folgt dem Anlageteil 19 in einem .Abstand a von etwa 60 mm zu dessen Hinterkante 21 ein Kröpfbereich 22 der Länge b von etwa 20 mm und einer Höhe h von 15 mm. Nach diesem Kröpfbereich 22 setzt sich der Bügel 18 als gerader Stabteil 23 bis zu einem Gelenk 24 fort, das den Bügel 18 an einen die Stirn des Benutzers querenden Stirnstab 26 anschließt. Der Abstand e des Gelenkes 24 von der Hinterkante 21 mißt etwa 120 mm.

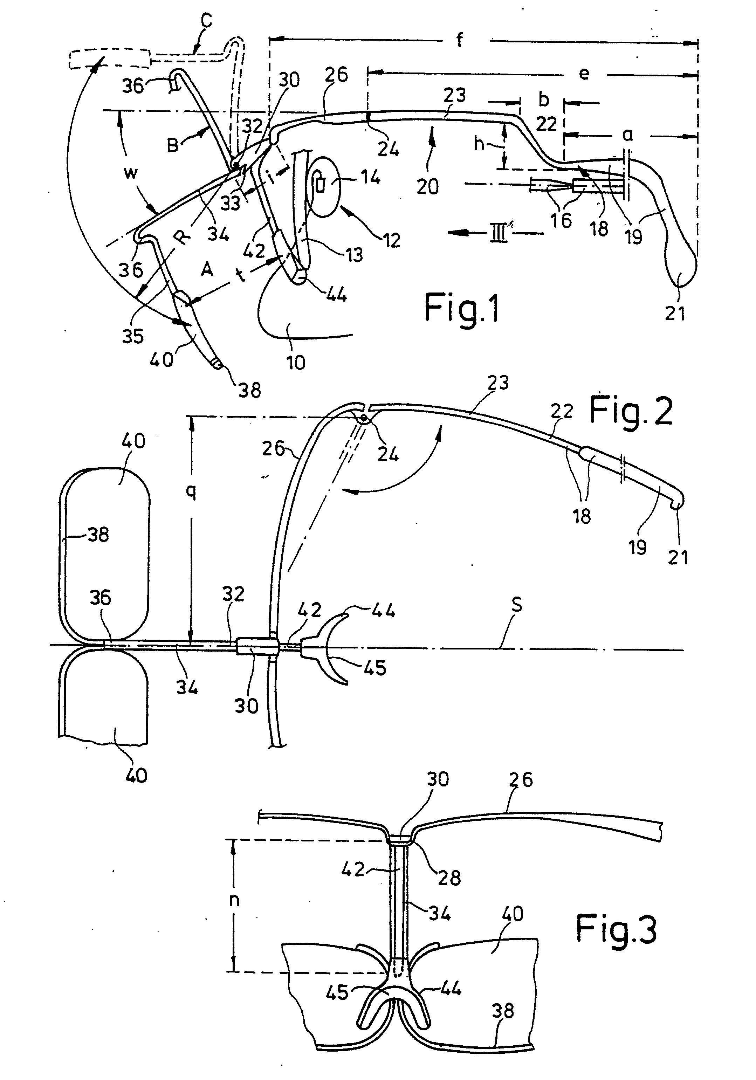

Der Stirnstab 26 verbindet zwei Bügel 18 miteinander - eine Gerade S in Fig. 2 ist Symmetrieebene in einem Abstand q von etwa 70 mm von dem Gelenk 24.

In der Symmetriegeraden S liegt eine U-förmige Ausformung 28 des Stirnstabes 26 als Einsatzlager für einen damit verlöteten Tragstab 30, der in einer Länge i von etwa 20 mm und in einem Neigungswinkel w (etwa 30°) vom Stirnstab 26 starr abragt, wie dies insbesondere Fig. 1 zeigt.

An den Tragstab 30 ist mittels eines Klappgelenkes 32 ein Metallstreifen 34 angelenkt, dessen freies Ende 35 unter Bildung einer U-förmigen Griffausformung 36 rechtwinklig abgebogen ist. Am freien Ende 35 sitzt in einem Rahmen 38 ein Paar von mikroskopischen Linsen 40. Diese können allein oder mit ihrem Rahmen 38 am freien Ende 35 austauschbar vorgesehen sein.

Dank der besonderen Ausbildung des Klappgelenkes 32 und eines in der Zeichnung nicht dargestellten, gegen den Metallstreifen 34 im Bereich des Tragstabes 30 drückenden Kraftspeichers ist es möglich, diesen Metallstreifen 34 --und damit die mikroskopischen Linsen 40 -- stufenlos in einem mittleren Radius R von bevorzugt 55 bis 60 mm aus der in Fig. 1 gezeigten Sichtstellung um das Klappgelenk 32 zu führen.

In einem in Fig. 1 dargestellten Ausführungsbeispiel sind allerdings drei Raststufen vorgesehen, deren erste "A" bereits weiter oben beschrieben ist, deren zweite "B" dadurch bestimmt ist, daß der Metallstreifen 34 gegenüber der erstbeschriebenen Lage um etwa 90. geschwenkt ist. In der gestrichelt angedeuteten Lage "C" ist der Metallstreifen 34 gegenüber der erstbeschriebenen Lage um etwa 120° verschwenkt, und die mikroskopischen Linsen 40 verlaufen etwa parallel zum Stabteil 23 des Bügels 18. Im übrigen wird die als Sichtstellung zu bezeichnende Lage "A" durch eine nach unten abragende Nase 33 des Tragstabes 30 bestimmt.

In Fig. 1 ist hinter der Nase 33 ein Stützstab 42 zu erkennen, der etwa parallel zum freien Ende 35 des Metallstreifens 34 in dessen Sichtstellung "A" gerichtet ist. Die Länge n dieses Stützstabes 42 entspricht der freien Länge des freien Endes 35 des Metallstreifens 34. Der Abstand zwischen dem freien Ende 35 des Metallstreifens 34 und dem Stützstab 42 beträgt in der in Fig. 1 gezeigten Sichtstellung "A" etwa 35 mm.

Wie insbesondere Fig. 3 darstellt, sitzt das freie Ende des Stützstabes 42 in einem dem Nasensattel etwa angepaßten Stützfuß 44. Dieser lagert in Benutzungsstellung unterhalb der Brille 12 auf der Nase 10 des Benutzers und stört infolgedessen einen eine Brille 12 tragenden Benutzer nicht. Der Stützfuß 44 ist nach unten hin U-artig ausgeformt, um eine anschmiegende Sitzfläche 45 für die Nase anbieten zu können.

Die Fig. 2 läßt durch einen Pfeil erkennen, daß der Bügel 18 um das Gelenk 24 bis zum Anschlag an den Stützstab 42 eingeklappt werden kann, so daß sich eine verhältnismäßig kleine Ruhelage der Vorrichtung herstellen läßt. Der Kröpfbereich 22 ist durch Materialauswahl so ausgestaltet, daß durch Verformung eine Anpassung des Bügels 18 an den Benutzer erleichtert wird.

## Ansprüche

1. Tragvorrichtung (20) zum Befestigen von Linsen (40) am Kopf eines Benutzers mit einem Paar von Brillenbügeln (18) an einem diese verbindenden Stirnstab (26), einem von diesem abragenden Stützstab (42) mit auf die Nase (10) eines Benutzers aufsetzbarem Stützfuß (44) od.dgl. sowie mit einem angelenkten Tragteil (34-36) für die als Vergrößerungsokulare geschliffenen Linsen, die in einer Sichtstellung (A) in einem Abstand (d) zum Stützstab verlaufen.

2. Tragvorrichtung nach Anspruch 1, dadurch gekennzeichnet, daß das Tragteil aus einem Werkstoffstreifen (34) besteht, der einends durch ein Klappgelenk (32) an den Stirnstab (26) angeschlossen und in Abstand (t) dazu rechtwinklig gebogen ist, wobei am freien Ende (35) des Werkstoffstreifens Aufnahmen (38) für die Linsen (40) vorgesehen sind.

3. Tragvorrichtung nach Anspruch 1 oder 2, dadurch gekennzeichnet, daß das Klappgelenk (32) an einem vom Stirnstab (26) in Längsachse (S) der Tragvorrichtung (20) abragenden Tragstab (30) angeordnet ist.

4. Tragvorrichtung nach einem der Ansprüche 1 bis 3, dadurch gekennzeichnet, daß der gegebenenfalls eine Länge (i) von etwa 20 mm aufweisende Tragstab (30) aus einer von den Bügeln (18) bestimmten Ebene in einem Winkel (w) zum Stützfuß (44) hin geneigt ist.

5. Tragvorrichtung nach einem der Ansprüche 1 bis 4, dadurch gekennzeichnet, daß der Tragstab (30) und/oder der an ihn anschließende Teil des Werkstoffstreifens (34) in sich längenveränderlich ausgebildet sind/ist.

6. Tragvorrichtung nach einem der Ansprüche 1 bis 5, gekennzeichnet durch ein Griffelement (36) am Tragteil (34 - 36), wobei gegebenenfalls das Griffelement durch eine Ausformung (36) am Übergang des Werkstoffstreifens (34) in sein rechtwinklig stehendes freies Ende (35) gebildet ist.

7. Tragvorrichtung nach wenigstens einem der Ansprüche 1 bis 6, dadurch gekennzeichnet, daß das Tragteil (34 -36) in einem in der Längsachse (S) der Tragvorrichtung (20) liegenden Schwenkwinkel von bis zu 180° um das Klappgelenk (32) schwenkbar ist.

8. Tragvorrichtung nach wenigstens einem der Ansprüche 1 bis 7, dadurch gekennzeichnet, daß das Tragteil (34 -36) um das Klappgelenk (32) zwischen der Sichtstellung (A) und einer zum Bügel (18) gegebenenfalls parallelen Endstellung (C) der Linsen (40) in Raststufen (A, B, C) verstellbar ist.

9. Tragvorrichtung nach wenigstens einem der Ansprüche 1 bis 8, dadurch gekennzeichnet, daß die Linsen (40) austauschbar am Tragteil (34 - 36) angeordnet sind.

10. Tragvorrichtung nach wenigstens einem der Ansprüche 1 bis 9, dadurch gekennzeichnet, daß die Bügel (18) mit dem Stirnstab (26) durch Gelenke (24) verbunden sind.

11. Tragvorrichtung nach wenigstens einem der Ansprüche 1 bis 10, dadurch gekennzeichnet, daß der Bügel (18) zwischen dem Gelenk (24) einerseits und einem das freie Ende des Bügels bildenden Anlageteil (19) anderseits in einem Kröpfbereich (22) höhenversetzt geformt ist, wobei gegebenenfalls die Länge (b) des Kröpfbereiches (22) etwa der Länge (i) des Tragstabes (30) entspricht und/oder zumindest der Kröpfbereich (22) des Bügels (18) zur Anpassung verformbar ausgebildet ist.

Fig.1

Fig.2

Fig.3